# FASCICULE DE BREVET EUROPEEN

(11) **EP 1 477 732 B1**
(45) Date de publication et mention de la délivrance du brevet: **23.03.2011**
(21) Numéro de dépôt: 04291250.1
(22) Date de dépôt: 14.05.2004
(51) Int. Cl.: F21V 14/08, B60Q 1/14, F21W 101/10

(54) **Dispositif projecteur avec plaque pivotante, notamment pour véhicule automobile**
Scheinwerfer mit einer schwenkbaren Blende, insbesondere für Kraftfahrzeuge
Projector with a pivoting plate, in particular for motor vehicles

(30) Priorité: 16.05.2003 FR 0305926
(43) Date de publication de la demande: 17.11.2004
(73) Titulaire: VALEO VISION, 93012 Bobigny Cedex (FR)
(72) Inventeur: Mensales, Alexandre, 95360 Montmagny (FR); Hue, David, 78400 Chatou (FR)

(56) Documents cités:
- EP-A- 0 411 544
- EP-A- 0 479 634
- EP-A- 1 128 125
- EP-A- 1 288 563
- DE-A- 3 806 658

## Description

La présente invention a pour objet un dispositif projecteur équipé d'une plaque pivotante. D'une façon générale, la plaque pivotante équipant le dispositif projecteur selon l'invention peut évoluer, sur commande, entre une première position, dite position active, dans laquelle des signaux lumineux, émis par une source lumineuse du dispositif projecteur équipé de ladite plaque, rencontrent la plaque pivotante, et une deuxième position, dite position passive, dans laquelle les signaux lumineux ne rencontrent pas la plaque pivotante. L'invention a essentiellement pour but de proposer un moyen d'actionnement de la plaque pivotante qui soit fiable, économique, peu encombrant, léger, de consommation électrique faible, et dégageant peu de chaleur.

Le domaine de l'invention est, d'une façon générale, celui des projecteurs de véhicule automobile. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des feux anti-brouillard.

Par ailleurs, on connaît un type de projecteur perfectionné, appelé projecteur bifonction, qui cumule les fonctions de feux de croisement et de feux longue portée : à cet effet, on peut par exemple disposer à l'intérieur du projecteur bifonction un cache amovible, par exemple une plaque métallique, pouvant passer sur commande d'une première position dans laquelle il occulte une partie du signal lumineux produit par la source lumineuse du projecteur, la portée du projecteur étant ainsi limitée à celle des feux de croisement pour ne pas éblouir les autres conducteurs, à une deuxième position dans laquelle il n'occulte pas le signal lumineux produit par la source lumineuse du projecteur, la portée du projecteur correspondant alors à celle des feux de route. Cet exemple de réalisation est principalement mis en oeuvre dans les dispositifs projecteurs de type elliptiques comme décrit dans DE 38 06 658, document décrivant les caractéristiques du préambule de la revendication 1.

On connaît également un type particulier de projecteur, qui permet, notamment la nuit, d'obtenir une image visible de la route sur un écran de contrôle. Ce type de projecteur est en fait un projecteur de type feu de route, équipé d'un filtre infrarouge basculant, qui peut passer sur commande d'une première position dans laquelle il filtre l'ensemble des signaux lumineux produits par la source lumineuse du projecteur, de telle sorte que seuls les rayons infrarouges, non éblouissants, sortent effectivement du dispositif projecteur, à une deuxième position dans laquelle le filtre n'occulte aucun signal lumineux produit par la source lumineuse du projecteur, la portée du projecteur correspondant alors à celle des feux de route. Un tel projecteur est par exemple décrit dans EP 0 479 634.

Dans le cadre de l'invention, le cache amovible et le filtre infrarouge sont deux exemples particuliers de plaque pivotante équipant les dispositifs projecteurs selon l'invention. D'une façon générale, les dispositifs concernés par l'invention sont tous ceux qui sont susceptibles d'être équipés d'une plaque pivotante, indépendamment de la fonction remplie par ladite plaque pivotante, capable de basculer entre deux positions de fonctionnement.

Un exemple d'un tel dispositif connu de FR 2 839 138 est montré, en coupe et de dessus, à la figure 1. L'exemple représenté correspond à un feu de route 110, de type elliptique, équipé d'un filtre infra-rouge 103. Le feu de route 110 comporte essentiellement un réflecteur 100, une source de lumière 101, émettant des signaux lumineux 108, disposée au voisinage du sommet du réflecteur 100, et une lentille de sortie 102 disposée pour obtenir un faisceau lumineux satisfaisant les exigences des différentes normes. Les signaux lumineux 108 sont émis soit directement vers la surface de sortie 102, soit indirectement après avoir subi d'éventuelles déviations et/ou réflexions. Le filtre infrarouge 103 est disposé dans le feu de route 110. Le filtre infrarouge 103 est amovible, c'est à dire capable d'évoluer entre une première position 105 approximativement verticale sur la figure, dite position active, dans laquelle la majorité des signaux lumineux émis par la source lumineuse 101 traverse le filtre 103, et une deuxième position 104 approximativement horizontale sur la figure, dite position passive, dans laquelle aucun des signaux lumineux émis par la source lumineuse 101 ne traverse le filtre 103. Chaque filtre 103 peut être constitué par une plaque de forme rectangulaire ou circulaire susceptible de pivoter autour d'un axe de rotation 106, par exemple rattaché à un boîtier 107 constituant l'enveloppe du feu de route 110. L'axe de rotation 106 est entraîné par un moteur 109, qui permet de faire basculer le filtre 103 de la première position 105 à la deuxième position 104.

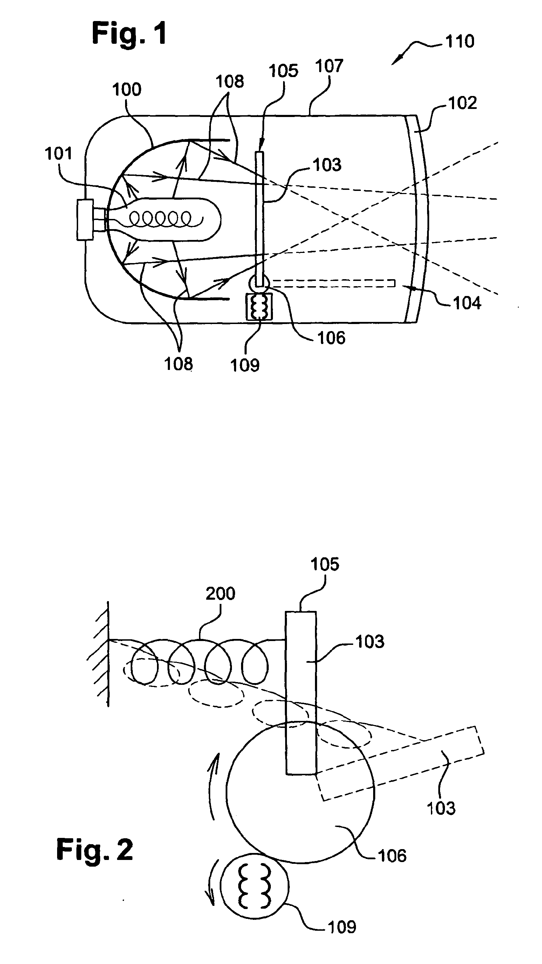

Les différentes normes en vigueur imposent que les plaques pivotantes, disposées dans les dispositifs projecteurs, qu'il s'agisse d'un filtre infrarouge ou d'un cache amovible, reviennent dans une position sécurisée en cas de dysfonctionnement du dispositif projecteur considéré. La position sécurisée est celle dans laquelle le dispositif projecteur présente le moins de gêne possible pour les autres conducteurs. En l'occurrence, dans les deux cas, la position sécurisée correspond à la première position verticale de la plaque pivotante au sein du dispositif projecteur. Dans l'état de la technique, illustré à la figure 2, lorsqu'un dysfonctionnement du moteur 109 se produit, un ressort de rappel 200 permet de ramener automatiquement la plaque pivotante, par exemple le filtre infrarouge 103, dans la position sécurisée.

Dans l'état de la technique, pour faire bouger la plaque pivotante 105, on utilise le plus souvent un actionneur 109 de type électro-aimant, rotatif ou linéaire, dont la principale qualité est la longévité. Cependant, l'utilisation de moteurs à électro-aimants dans les dispositifs projecteurs présentent un certain nombre d'inconvénients : ce type d'actionneur est très encombrant, particulièrement lourd, et ses caractéristiques de fonctionnement dépendent fortement des variations de température de l'environnement dans lequel il fonctionne.

C'est un objet de l'invention de répondre à l'ensemble des inconvénients qui viennent d'être mentionnés. A cet effet, dans l'invention, on propose un dispositif projecteur équipé d'un moteur à courant continu pour provoquer le basculement d'une plaque pivotante. En outre, dans l'invention, on propose une solution pour éviter que le moteur à courant continu ne se dégrade trop rapidement. En effet, les risques de dégradation d'un moteur à courant continu sont plus importants que ceux encourus avec un moteur à électro-aimant : une fois que la plaque pivotante a été amenée dans sa deuxième position, le moteur à courant continu entame une phase

dite de maintien, en couple bloqué, pour garder la plaque pivotante dans la deuxième position. Durant cette phase, le moteur à courant continu se comporte électriquement comme une simple résistance. Sa consommation en courant augmente alors fortement, la puissance à dissiper devenant alors rapidement trop importante pour assurer l'intégrité du moteur. Dans l'invention, on propose donc de limiter, par exemple au moyen d'une carte électronique de contrôle, le courant d'alimentation du moteur, au moins pendant les phases où le moteur à courant continu fonctionne en couple bloqué.

L'invention concerne donc essentiellement un dispositif projecteur comportant au moins :
- une source lumineuse émettant des signaux lumineux vers une surface de sortie du dispositif projecteur pour produire un faisceau lumineux;
- une plaque pivotante pouvant évoluer entre une position passive dans laquelle elle n'intercepte pas les signaux lumineux émis par la source lumineuse et une position active dans laquelle elle intercepte au moins une partie des signaux lumineux émis par la source lumineuse;
- un moteur pour provoquer le mouvement de la plaque pivotante et la faire passer de la position active à la position passive;
- un ressort de rappel pour ramener la plaque pivotante depuis la position passive vers la position active lorsque le moteur n'est plus alimenté électriquement;
caractérisé en ce que l'évolution de la plaque pivotante entre la position passive et la position active comporte une première phase d'initialisation, une deuxième phase de transition, et une troisième phase de maintien, en ce que le moteur est un moteur à courant continu, et en ce que une carte électronique de contrôle limite l'alimentation en courant du moteur à un seuil de limitation préalablement déterminé, au moins pendant une partie de la phase de maintien.

Le dispositif projecteur selon l'invention peut également présenter, outre les caractéristiques principales énoncées dans le paragraphe précédent, une ou plusieurs des caractéristiques secondaires suivantes :
- la limitation en courant au seuil de limitation est observée pendant toute la phase de maintien ;
- la limitation en courant au seuil de limitation est observée dès la mise en action du moteur à courant continu ;
- le seuil de limitation correspond à une valeur de l'intensité du courant d'alimentation du moteur pour obtenir un couple mécanique du moteur nécessaire afin de compenser l'effet du ressort de rappel lors de la phase de maintien ;
- le seuil de limitation est calculé pour une température maximale susceptible d'être atteinte par le dispositif projecteur ;
- la plaque pivotante est un filtre infrarouge ;
- la plaque pivotante est un cache amovible permettant de réaliser un projecteur bifonction code/route.
   Un autre objet de l'invention est un véhicule automobile équipé d'un dispositif projecteur comportant les caractéristiques principales précédemment précisées et éventuellement une ou plusieurs caractéristiques secondaires qui viennent d'être mentionnées.
   L'invention et ses différentes applications seront mieux comprises à la lecture de la description qui suit et à l'examen des figures qui l'accompagnent. Celles-ci ne sont présentées qu'à titre indicatif et nullement limitatif de l'invention.
- à la figure 1, déjà décrite, une représentation schématique d'un dispositif projecteur de l'état de la technique utilisant une plaque pivotante ;
- à la figure 2, également déjà décrite, une représentation schématique du principe de basculement des plaques pivotantes dans l'état de la technique;
- à la figure 3, une représentation schématique d'un cycle de fonctionnement du dispositif projecteur selon un premier exemple de réalisation selon l'invention ;
- à la figure 4, une représentation schématique d'un cycle de fonctionnement du dispositif projecteur selon un deuxième exemple de réalisation selon l'invention.

Les éléments apparaissant sur différentes figures conservent les mêmes références.

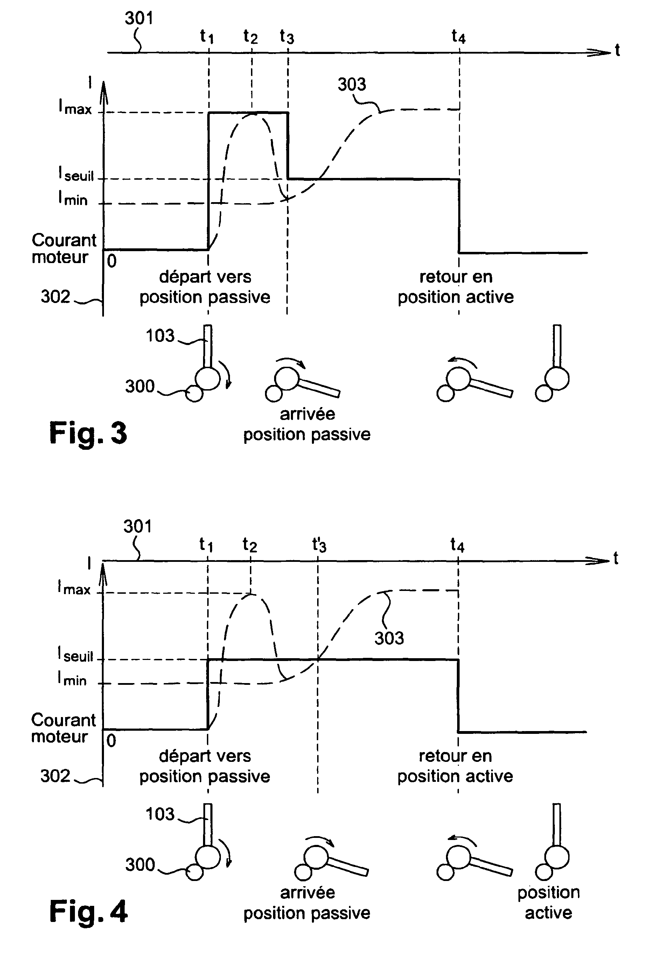

A la figure 3 et à la figure 4, on a représenté deux exemples de fonctionnement du dispositif projecteur selon l'invention, en représentant l'évolution dans le temps de l'intensité du courant consommée par le moteur à courant continu. Une courbe 303, représentée en pointillés, illustre l'évolution, avant l'invention, du courant alimentant un moteur à courant continu 300. Le temps est repéré par un axe horizontal 301, l'intensité du courant par un axe vertical 302.

On considère tout d'abord le premier exemple, correspondant à la figure 3. A un instant t1, la plaque pivotante 103 entame un mouvement pour passer de la position active à la position passive, suite par exemple à une action du conducteur. L'instant t1 marque le début d'une phase d'initialisation, qui s'achève à un instant t2, correspondant à une consommation maximale Imax en courant du moteur à courant continu 300. Le pic de courant observé est nécessaire pour mettre en mouvement la plaque pivotante 103, le passage d'un état immobile à un état mobile de la plaque pivotante 103 nécessitant une consommation en courant approximativement équivalente à celle observée pour un fonctionnement en couple bloqué.

La plaque pivotante 103 est en mouvement jusqu'à un instant t3, instant auquel elle arrive dans sa position passive. La phase de mouvement, située entre les instants t2 et t3 est une phase dite de transition dans laquelle la consommation en courant électrique du moteur à courant continu diminue progressivement pour atteindre une valeur minimale Imin du cycle de fonctionnement du moteur. La valeur Imin est atteinte à l'instant t3 ou avant cet instant. A partir de l'instant t3, on entame une phase dite de maintien dans laquelle la plaque pivotante 103 est bloqué dans sa position passive, le moteur à courant continu fonctionnant alors en couple bloqué.

Avant la mise en place de l'invention, la consommation en courant croissait alors de nouveau, à partir de l'instant t3, jusqu'à avoisiner une valeur proche de la consommation maximale Imax, comme illustré par la courbe 303. Dans l'invention, on propose de limiter à une valeur Iseuil, désignée comme seuil de limitation, l'intensité du courant consommé par le moteur à courant continu.

Dans le premier exemple illustré la limitation en courant au seuil de limitation est effective pendant au moins une partie de la phase de maintien, avantageusement pendant toute la phase de maintien. Cette phase de maintien s'achève à un instant t4 marquant le retour, par exemple grâce au ressort de rappel 200, de la plaque pivotante 103 dans sa position active, le moteur à courant continu n'étant alors plus alimenté.

Dans le deuxième exemple illustré, correspondant à la figure 4, la limitation en courant au seuil de limitation Iseuil est effective dès le départ, c'est à dire dès la mise en marche du moteur à courant continu 300. Ainsi, dans le deuxième exemple illustré, l'intensité maximale Imax n'est jamais atteinte, même pendant la phase d'initialisation. Une conséquence immédiate de cette limitation initiale est que les phases d'initialisation et de transition sont légèrement plus longues que dans le premier exemple illustré, le couple moteur disponible étant désormais moins important. La phase de transition s'achève donc à un instant t3' ultérieur à l'instant t3 de la figure 3.

Dans l'ensemble des exemples de réalisation de l'invention, le seuil de limitation est préalablement déterminé pour que le moteur à courant continu 300 produise un couple mécanique suffisant pour maintenir la plaque pivotante 103 dans sa position passive, position qui correspond à une tension maximale du ressort de retour. En outre, la détermination du seuil de limitation est réalisée dans les conditions de température les moins favorables pour le fonctionnement du moteur, typiquement à une température ambiante de 135 degrés Celsius, qui est considérée comme la température maximale susceptible d'être atteinte dans les dispositifs projecteurs considérés.

Le premier exemple de réalisation peut avantageusement être utilisé pour les dispositifs projecteurs équipés d'un filtre infrarouge, habituellement relativement lourd. Le deuxième exemple peut avantageusement être utilisé pour les dispositifs projecteurs équipés d'un cache amovible présent dans les dispositifs projecteurs bifonction ; en effet, le cache amovible est habituellement plus léger que le filtre infrarouge, le couple moteur habituellement nécessaire dans la phase d'initialisation étant ainsi moins important et, dans l'invention, la pénalisation en temps de transition de la plaque pivotante étant ainsi minime.

La limitation en courant est effectuée au moyen d'une carte électronique de contrôle. Cette carte électronique peut être dédiée uniquement au contrôle du moteur à courant continu, ou également intégrer différentes autres fonctionnalités, telles que par exemple la gestion des fonctions AFS. On peut prévoir une carte électronique de contrôle par dispositif projecteur selon l'invention, ou bien une carte électronique unique pour une paire de dispositifs projecteurs selon l'invention. Par ailleurs, la carte électronique peut être utilisée pour réguler le courant moteur afin de s'affranchir des variations de résistance de ce dernier dues aux variations de température, les variations de couple moteur pouvant ainsi être limitées. La carte électronique peut également intégrer une protection thermique diminuant l'intensité du courant moteur jusqu'à extinction, afin de protéger à la fois le moteur d'un échauffement excessif et l'étage de puissance alimentant le moteur.

Grâce à l'invention, on dispose d'une solution de motorisation des plaques pivotantes peu encombrante, et avec laquelle on maîtrise l'échauffement du moteur, notamment lorsqu'il fonctionne en couple bloqué

## Revendications

1. Dispositif projecteur comportant au moins :
- une source lumineuse (101) émettant des signaux lumineux (108) vers une surface de sortie (102) du dispositif projecteur pour produire un faisceau lumineux ;
- une plaque pivotante (103) pouvant évoluer entre une position passive (104) dans laquelle elle n'intercepte pas les signaux lumineux (108) émis par la source lumineuse (101) et une position active (105) dans laquelle elle intercepte au moins une partie des signaux lumineux (108) émis par la source lumineuse (101);
- un moteur (300) pour provoquer le mouvement de la plaque pivotante (103) et la faire passer de la position active (105) à la position passive (104) ;
- un ressort de rappel (200) pour ramener la plaque pivotante (103) depuis la position passive (104) vers la position active (105) lorsque le moteur (300) n'est plus alimenté électriquement,
**caractérisé en ce que** l'évolution de la plaque pivotante (103) entre la position passive (104) et la position active (105) comporte une première phase d'initialisation, une deuxième phase de transition, et une troisième phase de maintien, **en ce que** le moteur (300) est un moteur à courant continu, et **en ce que** une carte électronique de contrôle limite l'alimentation en courant du moteur (300) à un seuil de limitation (Iseuil) préalablement déterminé, au moins pendant une partie de la phase de maintien.

2. Dispositif projecteur selon la revendication précédente **caractérisé en ce que** la limitation en courant au seuil de limitation (Iseuil) est observée pendant toute la phase de maintien.

3. Dispositif projecteur selon la revendication 1 **caractérisé en ce que** la limitation en courant au seuil de limitation (Iseuil) est observée dès la mise en action du moteur à courant continu.

4. Dispositif projecteur selon l'une au moins des revendications précédentes **caractérisé en ce que** le seuil de limitation (Iseuil) correspond à une valeur de l'intensité du courant d'alimentation du moteur (300) pour obtenir un couple mécanique du moteur (300) nécessaire afin de compenser l'effet du ressort de rappel (200) lors de la phase de maintien.

5. Dispositif projecteur selon la revendication précédente **caractérisé en ce que** le seuil de limitation (Iseuil) est calculé pour une température maximale susceptible d'être atteinte par le dispositif projecteur.

6. Dispositif projecteur selon l'une au moins des revendications précédentes **caractérisé en ce que** la plaque pivotante (103) est un filtre infrarouge.

7. Dispositif projecteur selon l'une au moins des revendications 1 à 5 **caractérisé en ce que** la plaque pivotante (103) est un cache amovible permettant de réaliser un projecteur bifonctions code/route.

8. Véhicule automobile équipé d'un dispositif projecteur selon l'une au moins des revendications précédentes.

## Claims

1. Headlight device, comprising at least:
- a source of light (101) which emits light signals (108) towards an output surface (102) of the headlight device, in order to produce a light beam;
- a pivoting plate (103) which can move between a passive position (104), in which it does not intercept the light signals (108) which are emitted by the source of light (101), and an active position (105), in which it intercepts at least part of the light signals (108) which are emitted by the source of light (101);
- a motor (300) to give rise to the movement of the pivoting plate (103), and make it go from the active position (105) to the passive position (104);
- a return spring (200) to return the pivoting plate (103) from the passive position (104) to the active position (105) when the motor (300) is no longer supplied electrically,
**characterised in that** the movement of the pivoting plate (103) between the passive position (104) and the active position (105) comprises a first stage of initialisation, a second stage of transition, and a third stage of retention, **in that** the motor (300) is a direct current motor, and **in that** an electronic control board limits the supply of current of the motor (300) to a previously determined limitation threshold (Iseuil), at least during part of the retention stage.

2. Headlight device according to the preceding claim, **characterised in that** the limitation of the current to the threshold current (Iseuil) is observed throughout the retention stage.

3. Headlight device according to claim 1, **characterised in that** the limitation of the current to the threshold current (Iseuil) is observed as soon as the direct current motor is put into action.

4. Headlight device according to at least one of the preceding claims, **characterised in that** the limitation threshold (Iseuil) corresponds to a value of the intensity of the supply current of the motor (300), in order to obtain mechanical torque of the motor (300) which is necessary in order to compensate for the effect of the return spring (200) during the retention stage.

5. Headlight device according to the preceding claim, **characterised in that** the limitation threshold (Iseuil) is calculated for a maximum temperature which can be reached by the headlight device.

6. Headlight device according to at least one of the preceding claims, **characterised in that** the pivoting plate (103) is an infrared filter.

7. Headlight device according to at least one of claims 1 to 5, **characterised in that** the pivoting plate (103) is a removable shield which makes it possible to provide a dual function low-beam/ high-beam headlight.

8. Motor vehicle equipped with a headlight device according to at least one of the preceding claims.

## Patentansprüche

1. Scheinwerfer mit wenigstens:
- einer Lichtquelle (101), die zu einer Austrittsfläche (102) des Scheinwerfers Lichtsignale (108) zum Erzeugen eines Lichtbündels aussendet;
- einer schwenkbaren Platte (103), die zwischen einer passiven Stellung (104), in der sie die von der Lichtquelle (101) ausgesandten Lichtsignale (108) nicht abschirmt, und einer aktiven Stellung (105), in der sie wenigstens einen Teil der von der Lichtquelle (101) ausgesandten Lichtsignale (108) abschirmt, bewegbar ist;
- einem Motor (300), um die Bewegung der schwenkbaren Platte (103) auszulösen und diese aus der aktiven Stellung (105) in die passive Stellung (104) zu bringen;
- einer Rückstellfeder (200), um die schwenkbare Platte (103) aus der passiven Stellung (104) in die aktive Stellung (105) zurückzubringen, wenn der Motor (300) nicht mehr elektrisch gespeist wird,
**dadurch gekennzeichnet, dass** die Bewegung der schwenkbaren Platte (103) zwischen der passiven Stellung (104) und der aktiven Stellung (105) eine erste Initialisierungsphase, eine zweite Übergangsphase und eine dritte Haltephase aufweist, dass der Motor (300) ein Gleichstrommotor ist, und dass eine elektronische Steuerplatine die Stromversorgung des Motors (300) zumindest während eines Teils der Haltephase auf einen zuvor festgelegten Begrenzungswert (Iseuil) beschränkt.

2. Scheinwerfer nach dem vorhergehenden Anspruch,
**dadurch gekennzeichnet, dass** die Strombegrenzung auf den Begrenzungswert (Iseuil) während der gesamten Haltephase eingehalten wird.

3. Scheinwerfer nach Anspruch 1,
**dadurch gekennzeichnet, dass** die Strombegrenzung auf den Begrenzungswert (Iseuil) von einer Betätigung des Gleichstrommotors an eingehalten wird.

4. Scheinwerfer nach wenigstens einem der vorhergehenden Ansprüche,
**dadurch gekennzeichnet, dass** der Begrenzungswert (Iseuil) einem Wert der Speisestromstärke des Motors (300) zum Erzielen eines mechanischen Drehmoments des Motors (300) entspricht, das zur Kompensierung der Wirkung der Rückstellfeder (200) während der Haltephase erforderlich ist.

5. Scheinwerfer nach dem vorhergehenden Anspruch,
**dadurch gekennzeichnet, dass** der Begrenzungswert (Iseuil) für eine durch den Scheinwerfer maximal erreichbare Temperatur berechnet ist.

6. Scheinwerfer nach wenigstens einem der vorhergehenden Ansprüche,
**dadurch gekennzeichnet, dass** die schwenkbare Platte (103) ein Infrarotfilter ist.

7. Scheinwerfer nach einem der Ansprüche 1 bis 5,
**dadurch gekennzeichnet, dass** die schwenkbare Platte (103) eine verschiebbare Blende ist, die einen Bifunktionsscheinwerfer für Abblendlicht/Fernlicht zu realisieren erlaubt.

8. Kraftfahrzeug, ausgestattet mit einem Scheinwerfer nach wenigstens einem der vorhergehenden Ansprüche.
